# EUROPEAN PATENT SPECIFICATION

(11) **EP 4 213 515 B1**
(45) Date of publication and mention of the grant of the patent: **04.03.2026**
(21) Application number: 22151849.1
(22) Date of filing: 17.01.2022
(51) Int. Cl.: H04W 8/18, H04W 8/20, H04W 12/30

(54) **METHOD OF PROVIDING A COMMUNICATION FUNCTION IN A USER EQUIPMENT**
VERFAHREN ZUR BEREITSTELLUNG EINER KOMMUNIKATIONSFUNKTION IN EINEM BENUTZERGERÄT
PROCÉDÉ DE FOURNITURE D'UNE FONCTION DE COMMUNICATION DANS UN ÉQUIPEMENT UTILISATEUR

(43) Date of publication of application: 19.07.2023
(73) Proprietor: Bayerische Motoren Werke Aktiengesellschaft, 80809 München (DE)
(72) Inventor: Neuhaeuser, Michael, 84427 Sankt Wolfgang (DE)

(56) References cited:
- US-A1- 2017 289 788
- US-A1- 2022 007 172
- US-B2- 9 456 409

## Description

### FIELD

Embodiments of the present disclosure relate to a method of providing a communication function in a user equipment, a computer readable storage medium, a management module for a communication module, and a user equipment. Embodiments of the present disclosure relate more particularly to the implementation of communication profiles, such as eSIM profiles, in user equipment, particularly in vehicles.

### BACKGROUND

The use of wireless communication systems is rapidly increasing. In particular, a user may have a variety of devices that should be equipped with communication functions. Such devices may include a smartphone, a tablet, a smart watch, and a car. Due to certain restrictions imposed by a mobile network operator, it may be difficult or even impossible to flexibly provide personalized communication functions to user devices.

In view of the above, a new method of providing a communication function in a user equipment, a computer readable storage medium, a management module for a communication module, and a user equipment, that overcome at least some of the problems in the art are beneficial.
US 2017/289788 A1 discloses a method for customizing a wireless communication device. A wireless communication device processor may determine whether a suitable new SIM is already available on the wireless communication device. In response to determining that the suitable new SIM is not available on the wireless communication device, the wireless communication device processor may send to a remote server (e.g., a subscription manager associated with a mobile network operator) a request to obtain a new SIM profile. The wireless communication device processor may then download and install the new SIM profile provided by the remote server.
US 2022/007172 A1 relates to a SIM card selection method which includes: receiving a first input of a user to a target application; and controlling, in response to the first input, the target application to perform a first operation based on a first SIM card. The first SIM card is a SIM card associated with a first display region, and the first display region is a display region in which an icon of the target application is located.
US 9 456 409 B2 discloses a method for use when a mobile communication device roams between a mobile communication home network in a home country and one or several mobile communication networks in one or several visited countries, which mobile communication device comprises a Subscriber Identity Module (SIM) card, wherein a digital data interconnection can be established between at least one collaborating network in a respective visited country and the home network so that Internet access can be provided to the mobile device by the home network via said interconnection when the mobile device is connected to the said collaborating network.

### SUMMARY

In light of the above, a method of providing a communication function in a user equipment, a computer readable storage medium, a management module for a communication module, and a user equipment are provided.

It is an object of the present disclosure to enable a communication function in a user equipment. In particular, it is an object of the present disclosure to flexibly provide personalized communication functions for different user equipment.

The objects are solved by the features of the independent claims. Preferred embodiments are defined in the dependent claims. Any "aspect", "example" and "embodiment" of the description not falling within the scope of the claims does not form part of the invention and is provided for illustrative purposes only.

According to an independent aspect of the present disclosure, a method of providing a communication function in a user equipment, UE, is provided. The method includes: receiving, at the user equipment, a login request (e.g., from the user) to log the user in to the user equipment; and determining, by the user equipment, based on the login, whether the user equipment has (e.g., stored) a communication profile associated with the user.

Preferably, the login request is received at a user interface of the user equipment, or at an external entity connected to the user equipment. The external entity may be, for example, a mobile terminal that is wirelessly connected to the user equipment. The wireless connection may be established via a mobile network (e.g., a cellular network such as a 5G network), near field communication, Wi-Fi, or Bluetooth, but the present disclosure is not limited to these examples. For example, the external entity may be connected to the user equipment by one or more cables.

If it is determined that the user equipment already has a communication profile associated with the user, the method includes enabling the stored communication profile to provide the communication function for the user. The communication profile may be stored in the user equipment. In further embodiments, the user equipment may have a plurality of SIM cards (i.e., physical SIM cards) each being associated or associable with a respective communication profile. The plurality of SIM cards may be exchangeable and/or may be provided in an "exchange magazine".

If it is determined that the user equipment does not have a communication profile associated with the user, the method includes: sending, by the user equipment, a first request to a first server to request support information for obtaining a communication profile associated with the user; receiving, at the user equipment, the support information from the first server; and obtaining, by the user equipment, the communication profile from the first server or a second server different from the first server based on the support information. The first server is a management server for managing user equipment and has stored a user profile of the user. The second server is a mobile network operator, MNO, server.

According to some embodiments, which can be combined with other embodiments described herein, the communication profile is an eSIM profile of the user. Additionally, or alternatively, the communication profile is a personalized communication profile of the user.

The eSIM (embedded subscriber identity module) is a standardized procedure for the secure embedding of subscriber information in a module of a telecommunications device. For communication via eSIM, security or data confidentiality is crucial. For this purpose, the module contains a standardized digital certificate. Worldwide, a large number of different certificates exist, wherein a certain type of eSIM only works with a certain type of certificate.

The embodiments of the present disclosure are not limited to eSIM profiles, and other present or future network identifiers can benefit from the embodiments of the present disclosure.

According to some embodiments, which can be combined with other embodiments described herein, the method further includes enabling, by the user equipment, the communication profile obtained from the first server or second server.

According to some embodiments, which can be combined with other embodiments described herein, the enablement of the previously existing (e.g., stored) or downloaded communication profile is performed or granted only if the user is positively authenticated during the login process. The authentication may use a particular security level. For example, authentication may require the user to enter a password or key or perform Face ID. In some implementations, auto login without further protection may not be sufficient to enable the previously existing (e.g., stored) or downloaded communication profile.

According to some embodiments, which can be combined with other embodiments described herein, the first server is a management server or backend for managing a plurality of UE devices. For example, the first server can be owned and/or operated by a manufacturer of the UE devices, such as a car manufacturer. Accordingly, the first server can be an Original Equipment Manufacturer (OEM) server or backend. However, the present disclosure is not limited thereto, and the first server may be owned and/or operated by another third party.

According to some embodiments, which can be combined with other embodiments described herein, the second server is a mobile network operator, MNO, (or mobile virtual network operator, MVNO) server or backend. The MNO or MVNO can provide the communication profile for the user which should be downloaded and installed in the user equipment.

The MNO may also be referred to as a wireless service provider, wireless carrier, cellular company, or mobile network carrier, and is a provider of wireless communications services that owns or controls all the elements necessary to sell and deliver services to a user. In particular, the MNO owns or controls the elements of the network infrastructure necessary to provide services to subscribers (users) over a licensed spectrum.

The user equipment and the first server communicate via a transmission medium, such as a network. In a preferred embodiment, the network is a mobile network. The transmission medium may use any of various wireless communication technologies, or telecommunication standards, such as GSM, UMTS, LTE, LTE-Advanced (LTE-A), 5G, HSPA, and the like. A communication via future telecommunication standards is possible.

In some embodiments, the user equipment and the second server may communicate via the same network used for communication with the first server or a different network. In alternative embodiments, the user equipment does not communicate with the second server or communicates with the second server via the first server.

According to some embodiments, which can be combined with other embodiments described herein, the first request includes at least one of user equipment identification information (e.g., a Vehicle Identification Number, VIN), Subscriber Identity Module information (e.g., an EID), and user information. For example, the first request may always include the user information, and may optionally include the user equipment identification information and/or the Subscriber Identity Module information. The user information may be sent to the first server so that the first request can be mapped to a logged-in user. In some embodiments, the user information can be a Customer (C)-ID.

According to some embodiments, which can be combined with other embodiments described herein, the support information includes an activation code for the communication profile.

The activation code can be used to request the communication profile from the first server or the second server, in particular from an MNO. For example, the activation code may be sent to the UE's Local Profile Assistant (LPA), wherein the LPA uses the activation code to request a communication profile from the MNO, in particular a SM-DP+ of the MNO. In some embodiment, the activation code may include, or consist of, two parts: an SM-DP+ Address (e.g., a Fully Qualified Domain Name of the SM-DP+) and a matching ID or activation code token.

According to some embodiments, which can be combined with other embodiments described herein, the support information further includes at least one of Subscriber Identity Module information (e.g., an EID), a communication profile type (e.g., "personal" if the profile is assignable to one user only, or "default" if the profile is assignable to different users), user information (e.g., the C-ID), and a confirmation code (optional). The confirmation code can be used by the second server to verify that the user wants to use the communication profile in the user equipment.

According to some embodiments, which can be combined with other embodiments described herein, the step of obtaining, by the user equipment, the communication profile from the first server or a second server based on the support information includes sending, by the user equipment, a second request to the first server to request a download of the communication profile from the first server.

Preferably, the first server obtains the communication profile from the second server.

In further embodiments, which can be combined with other embodiments described herein, the step of obtaining, by the user equipment, the communication profile from the first server or a second server based on the support information includes sending, by the user equipment, a second request to the second server to request a download of the communication profile (e.g., directly) from the second server.

According to some embodiments, which can be combined with other embodiments described herein, the method further includes determining, by the user equipment, whether sufficient memory is available, e.g., on a storage medium of the user equipment, for installation of the communication profile.

The term "sufficient memory" is to be understood in the sense that the memory contains sufficient free storage to install and enable the communication profile. In some embodiments, the memory or total memory available for storing communication profiles may by preset. Optionally, the memory or total memory available for storing communication profiles may be changeable, e.g., in the user equipment and/or by the first server.

Preferably, the memory is provided by (a storage medium of) a Universal Integrated Circuit Card, UICC, also known as SIM card. In particular, the UICC may be an eUICC. The eUICC is a secure element that can contain one or more communication profiles, such as eSIM profiles. Each communication profile enables the eUICC to function in the same way as a removable SIM issued by the operator that created it. An eUICC may be built using any form factor from the traditional removable card to embedded formats soldered into devices.

According to some embodiments, which can be combined with other embodiments described herein, the method further includes, if it is determined that sufficient memory is available, installing the communication profile obtained from the first server or second server. The installing of the communication profile may be done according to the GSMA standard.

According to some embodiments, which can be combined with other embodiments described herein, the method further includes, if it is determined that sufficient memory is not available, deleting at least one other communication profile stored in the user equipment; and installing the communication profile obtained from the first server or second server. In other words, at least part of the storage medium is erased to provide sufficient capacity at least for the installation of the user's new communication profile.

According to some embodiments, which can be combined with other embodiments described herein, the at least one other communication profile is selected from the group including, or consisting of, an unknown communication profile, a least used communication profile, a recently least used communication profile, an oldest communication profile, and combinations thereof.

According to some embodiments, which can be combined with other embodiments described herein, the method further includes receiving, at the user equipment, a logout request to log the user out, in particular wherein the logout request is received via user input or automatically triggered by one or more events; and disabling the communication profile.

Preferably, the logout request is received at a user interface of the user equipment, or at an external entity connected to the user equipment. The external entity may be, for example, a mobile terminal that is wirelessly connected to the user equipment. The wireless connection may be established via a mobile network (e.g., a cellular network such as a 5G network), near field communication, Wi-Fi, or Bluetooth, but the present disclosure is not limited to these examples. In further embodiments, the logout request may be (e.g., automatically) triggered without explicit input from the user by one or more events. For example, the logout request may be triggered when the user leaves the vehicle, closes the vehicle, switches to another communication provide, and the like.

According to some embodiments, which can be combined with other embodiments described herein, the method further includes receiving, at the user equipment, a communication profile deletion request (e.g., from the user), in particular wherein the deletion request is received via user input or automatically triggered by one or more events; and deleting the communication profile according to the communication profile deletion request.

Preferably, the deletion request is received at a user interface of the user equipment, or at an external entity connected to the user equipment. The external entity may be, for example, a mobile terminal that is wirelessly connected to the user equipment. The wireless connection may be established via a mobile network (e.g., a cellular network such as a 5G network), near field communication, Wi-Fi, or Bluetooth, but the present disclosure is not limited to these examples. In further embodiments, the deletion request may be (e.g., automatically) triggered without explicit input from the user by one or more events. For example, the logout request may be triggered when the user leaves the vehicle, closes the vehicle, switches to another communication provide, and the like.

According to another independent aspect of the present disclosure, a machine-readable storage medium is provided. The machine-readable storage medium includes instructions executable by one or more processors to implement the method of providing a communication function in a user equipment of the embodiments of the present disclosure.

The term "machine-readable storage medium" includes various types of non-transitory memory devices or storage devices. The term "storage medium" is intended to include a computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The storage medium may include other types of non-transitory memory as well or combinations thereof.

According to another independent aspect of the present disclosure, a system is provided. The system includes one or more processors; and a memory (e.g., the above machine-readable storage medium) coupled to the one or more processors and comprising instructions executable by the one or more processors to implement the method of providing a communication function in a user equipment of the embodiments of the present disclosure.

According to another independent aspect of the present disclosure, a user equipment is provided. The user equipment includes the machine-readable storage medium.

According to another independent aspect of the present disclosure, a management module for a communication module is provided. The management module includes a communication interface configured for communication with the communication module and a server; and a processor module.

The communication interface is configured to receive a login request (or information about a login). The login request may include at least one of a username, a password, a key, and the like.

The processor module is configured to: determine, based on the login, whether the communication module has (e.g., stored) a communication profile associated with the user; if it is determined that the communication module has (e.g., stored) a communication profile associated with the user, initiate enabling of the stored communication profile; and, if it is determined that the communication module does not have a communication profile associated with the user stored, send a request to a first server via the communication interface to request support information for obtaining a communication profile associated with the user.

The communication interface is further configured to receive the support information from the first server.

The management module is further configured to obtain the communication profile from the first server or a second server based on the support information.

According to another independent aspect of the present disclosure, a user equipment is provided. The user equipment includes the management module and the communication module.

According to some embodiments, which can be combined with other embodiments described herein, the user equipment is selected from the group including, or consisting of, vehicles and mobile terminals.

The term "user equipment" (UE) particularly includes computer devices which are mobile (e.g., vehicles) and/or portable (e.g., mobile terminals) and which are configured for wireless communication. Examples of UE devices include mobile telephones or smart phones, portable gaming devices, laptops, wearable devices (e.g. smart watches, smart glasses, smart shoes), PDAs, portable Internet devices, music players, data storage devices, or other handheld devices, etc. In general, the term "UE" or "UE device" can be broadly defined to encompass any electronic, computing, and/or telecommunications device (or combination of devices) which is capable of wireless communication.

The term "vehicle" includes passenger cars, trucks, buses, campers, motorcycles, aircrafts, drones, ships, trains, etc., which are used to transport people, goods, etc. In particular, the term includes motor vehicles for the transport of persons.

The term "mobile terminal" includes in particular smartphones, but also other mobile telephones or cell phones, personal digital assistants (PDAs), tablet PCs, smart watches, smart glasses, and all current and future electronic devices that are equipped with communication technology.

Embodiments are also directed at devices for carrying out the disclosed methods and include device parts for performing each described method aspect. These method aspects may be performed by way of hardware components, a computer programmed by appropriate software, by any combination of the two or in any other manner. Furthermore, embodiments according to the disclosure are also directed at methods for operating the described user equipment and server(s). The disclosure includes method aspects for carrying out every function of the user equipment and server(s).

Further aspects, benefits, and features of the present disclosure are apparent from the claims, the description, and the accompanying drawings.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: shows a flow chart of a method for providing a communication function in a user equipment according to embodiments described herein;
- FIG. 2: shows a user equipment, a management server, and an MNO server according to embodiments described herein; and
- FIG. 3: shows a messaging process for providing a communication function in a user equipment according to embodiments described herein.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

Although the embodiments of the present disclosure are described with reference to a vehicle, it is to be understood that the present disclosure is not limited thereto and that the embodiments described herein may be implemented in and/or used with a number of different types of UE devices, including but not limited to cellular phones, tablet computers, wearable computing devices, portable media players, vehicles, and any of various other computing devices.

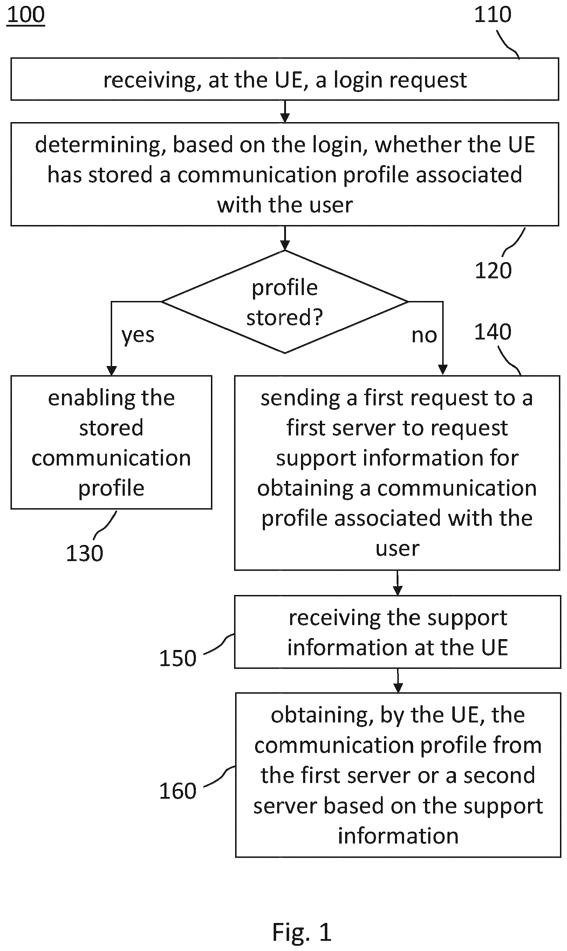

FIG. 1 shows a flow chart of a method 100 for providing a communication function in a user equipment according to embodiments described herein.

The method 100 includes in block 110 receiving, at the user equipment, a login request from the user to log the user in to the user equipment; and in block 120 determining, by the user equipment, based on the login, whether the user equipment has stored a communication profile associated with the user.

In particular, the user is known to the user equipment through the login. This may be due to the possibility that during the login process the user equipment communicates with the first server, which may have stored all relevant information, e.g., in a user profile of the user. The user equipment may then obtain information necessary to determine whether the user equipment has stored a communication profile associated with the user.

In some embodiments, the communication profile is a CSIM or an eSIM profile of the user.

The login request is received at a user interface of the user equipment, or an external entity connected to the user equipment. The user interface of the user equipment may be a Human Machine Interface (HMI), and may include, or be, a Touchscreen. The external entity may be, for example, a mobile terminal.

If it is determined that the user equipment has stored a communication profile associated with the user, the method 100 includes in block 130 enabling the stored communication profile to provide the communication function for the user.

Optionally, it can be checked whether communication functionalities, such as eSIM functionalities, have been previously enabled for the user (e.g., via a so-called onboarding). If not, the user may be directed to the account-federation with his/her MNO to enable eSIM functionalities. If it is determined that communication functionalities have been previously enabled for the user, block 130 may be executed. It is noted that this check can be done before or after the determining whether the user equipment has stored a communication profile associated with the user.

If it is determined that the user equipment does not have a communication profile associated with the user stored, the method 100 includes in block 140 sending, by the user equipment, a first request to a first server to request support information for obtaining a communication profile associated with the user; in block 150 receiving, at the user equipment, the support information from the first server; and in block 160 obtaining, by the user equipment, the communication profile from the first server or a second server based on the support information.

The first request may include at least one of user equipment identification information (e.g., a Vehicle Identification Number, VIN), Subscriber Identity Module information (e.g., an EID), and user information. The user information may be sent to the first server so that the first request can be mapped to a logged-in user. In some embodiments, the user information can be a Customer (C)-ID. It should be noted that the communication between the first server and the second server described later may not include the user information, such as the C-ID. Instead, communication between the first server and the second server may use a token generated by the second server.

According to some embodiments, the support information can include an activation code for the communication profile. The activation code can be used to request the communication profile from the first server or the second server.

In some embodiments, the support information further includes at least one of Subscriber Identity Module information (e.g., an EID), a communication profile type (e.g., "personal" if the profile is assignable to one user only, or "default" if the profile is assignable to different users), user information (e.g., the C-ID), and a confirmation code (optional). The confirmation code can be used by the second server to verify that the user wants to use the communication profile in the user equipment. In particular, the user can be asked whether he/she really wants to download the communication profile.

In some embodiments the method 100 may further include enabling, by the user equipment, the communication profile obtained from the first server or second server.

The step of obtaining, by the user equipment, the communication profile from the first server or a second server based on the support information may include sending, by the user equipment, a second request to the first server to request a download of the communication profile from the first server. Preferably, the first server obtains the communication profile from the second server using any suitable process.

Alternatively, the step of obtaining, by the user equipment, the communication profile from the first server or a second server based on the support information can include sending, by the user equipment, a second request to the second server to request a download of the communication profile from the second server. Accordingly, the user equipment may directly obtain the communication profile from the second server by communicating with the second server.

According to some embodiments, the method 100 further includes determining, by the user equipment, whether sufficient memory is available, e.g., on a storage medium of the user equipment, for installation of the communication profile.

Preferably, the memory is provided by (a storage medium of) a Universal Integrated Circuit Card, UICC, in particular an eUICC.

If it is determined that sufficient memory is available, the communication profile obtained from the first server or second server is installed e.g. on the eUICC. The installing of the communication profile may be done according to the GSMA standard.

If it is determined that sufficient memory is not available, at least one other communication profile stored in the user equipment can be deleted before the new communication profile is installed. The at least one other communication profile may be an unknown communication profile, a least used communication profile, a recently least used communication profile, and/or an oldest communication profile.

The term "sufficient memory" is to be understood in the sense that the memory contains sufficient free storage to install and enable the communication profile. In some embodiments, the memory or total memory available for storing communication profiles may by preset. Optionally, the memory or total memory available for storing communication profiles may be changeable, e.g., in the user equipment and/or by the first server.

According to some embodiments, the method 100 further includes receiving, at the user equipment, a communication profile deletion request from the user; and deleting the communication profile according to the communication profile deletion request. Preferably, the deletion request is received at the user interface of the user equipment, or the external entity connected to the user equipment.

In some implementations, the method 100 further includes receiving, at the user equipment, a logout request to log the user out; and disabling the communication profile. Preferably, the logout request is received at the user interface of the user equipment, or the external entity connected to the user equipment.

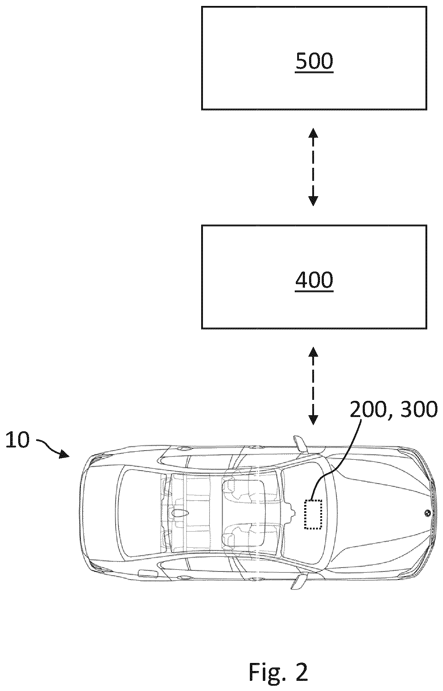

FIG. 2 shows a schematic view of a vehicle (UE) 10, a first server 400, and a second server 500 according to embodiments described herein. However, the present disclosure is not limited thereto, and the embodiments may be implemented in and/or used with a number of different types of UE devices, including, but not limited to, cellular phones, tablet computers, wearable computing devices, portable media players, and any of various other computing devices.

The vehicle 10 includes a communication module 200 and a management module 300 for the communication module 200. In some embodiments, the communication module 200 and the management module 300 are integrated in a single hardware and/or software module. In further embodiments, the communication module 200 and the management module 300 can be provided as separate hardware and/or software modules.

The term "module" as used throughout the present application may be understood in the sense of hardware components and software components or software instances which are designed to implement different tasks of the embodiments of the present disclosure.

The communication module 200 may include one or more sub-modules used for communication purposes, such as a Local Profile Assistant (LPA), a modem, and an eUICC.

The management module 300 may include a communication interface configured for communication with the communication module 200 and at least one server, such as the first server 400 and optionally the second server 500. For example, the communication interface may use a dedicated UE communication profile for communication with the at least one server via a mobile network. The dedicated UE communication profile can be provided in the management module 300, the communication module 200 (e.g., the eUICC of the communication module 200), or another module.

The vehicle 10 and the first server 400 communicate via a transmission medium, such as a network. In a preferred embodiment, the network is a mobile network. The transmission medium may use any of various wireless communication technologies, or telecommunication standards, such as GSM, UMTS, LTE, LTE-Advanced (LTE-A), 5G, HSPA, and the like.

In some embodiments, the vehicle 10 and the second server 500 may communicate via the same network used for communication with the first server 400 or a different network. In alternative embodiments, the vehicle 10 does not communicate with the second server 500 at all or communicates with the second server 500 via the first server 400.

According to some embodiments, the first server 400 is a management server or backend for managing a plurality of UE devices. For example, the first server 400 can be owned and/or operated by a manufacturer of the UE devices, such as a car manufacturer. However, the present disclosure is not limited thereto, and the first server 400 may be owned and/or operated by another third party.

Additionally, or alternatively, the second server 500 is a mobile network operator, MNO, server or backend. The MNO may also be referred to as a wireless service provider, wireless carrier, cellular company, or mobile network carrier. The MNO can provide the communication profile for the user which should be downloaded and installed in the user equipment.

The management module 300 includes the communication interface, and further includes a processor module to implement the aspects of the method described with respect to FIG. 1.

In particular, the communication interface can be configured to receive a login request from a user or information about a successful user login. The processor module is configured to: determine, based on the login, whether the communication module 200 has stored a communication profile associated with the user; if it is determined that the communication module 200 has stored a communication profile associated with the user, initiate enabling of the stored communication profile; and, if it is determined that the communication module 200 does not have a communication profile associated with the user stored, send a request to a first server 400 via the communication interface to request support information for obtaining a communication profile associated with the user.

The communication interface is further configured to receive the support information from the first server 400. The management module 300 is further configured to obtain (e.g., download) the communication profile from the first server 400 or second server 500 based on the support information and install the communication profile on, for example, the eUICC of the communication module 200.

In some embodiments, the communication profile obtained from the first server 400 or second server 500 and installed on the eUICC of the communication module 200 can be enabled by the LPA of the communication module 200.

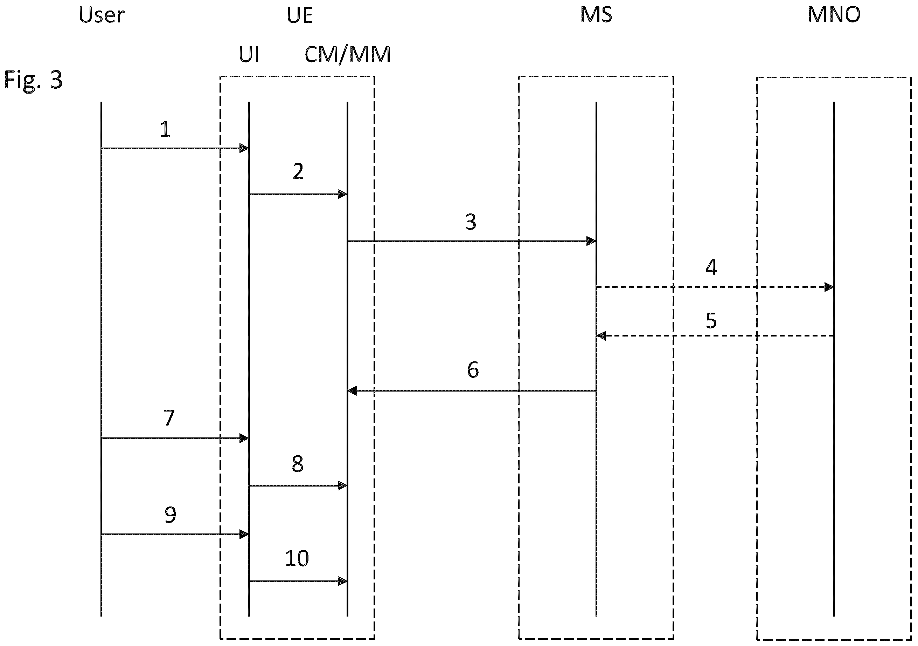

FIG. 3 shows a messaging process for providing a communication function in a user equipment according to embodiments described herein.

FIG. 3 shows schematically a user ("User"), a vehicle ("UE") having a user interface ("UI"), the communication module ("CM") and the management module ("MM"), a management server ("MS"), and an MNO server ("MNO").

The communication module CM and the management module MM can be integrated in a single hardware and/or software module. In further embodiments, the communication module CM and the management module MM can be provided as separate hardware and/or software modules.

The management module MM (e.g., the eSIM "brain" in the vehicle) handles the communication between the management server MS (e.g., a backend of the OEM or a 3rd party backend that performs the same function as the OEM backend) and the communication module CM in the vehicle in which the LPA, modem and SIM card are installed.

In the following, exemplary tasks of the management module MM are described.

### Task 1: Download an eSIM profile

The user logs in to the vehicle (arrow 1). Based on the login, the vehicle recognizes the user. The management module MM is notified about the login (arrow 2) and checks whether eSIM functionalities have been previously enabled for the user (e.g., via a so-called onboarding). If not, the user may be directed to the account-federation with his/her MNO to enable eSIM functionalities.

If eSIM functionalities are enabled (e.g., due to a general setup and/or account settings), the management module MM checks whether the user has already loaded an eSIM profile or not. If the user has loaded an eSIM profile, the process continues with Task 2 (enable eSIM profile). If the user has not yet loaded an eSIM profile e.g. because the eSIM profile has been lost or deleted, or the user is sitting in this vehicle for the first time, a new eSIM profile should be loaded for this user. To do this, the management module MM takes vehicle information, SIM card information and user information and requests an activation code from the management server MS (arrow 3).

The management server MS now exchanges information with the MNO (arrow 4) and receives an activation code (arrow 5). The management server MS sends the activation code to the management module MM (arrow 6).

Before the management module MM sends the activation code to the LPA of the communication module CM, the management module MM checks whether there is enough space left on the SIM card to install another eSIM profile.

### Task 2: Activate eSIM profile (enable)

Each time the user logs in, the corresponding eSIM profile must be enabled. The reason for this is that the eSIM profiles must be disabled for security reasons when the user logs out. To enable the eSIM profile (either the previously stored eSIM profile or the downloaded new eSIM profile), the management module MM sends a profile ID to the LPA of the communication module CM. The LPA enables the eSIM profile and then sends the result to the management module MM. The management module MM send this information as well as other status information of the SIM card and the eSIM profile to the management server MS.

### Task 3: Deactivate eSIM profile (disable)

Each time the user logs out (arrows 9 and 10), the corresponding eSIM profile must be disabled. The reason for this is that the profiles must be protected in case of absence. This is not necessary for a cell phone or a watch, as these devices are not passed on to other users.

The management module MM instructs the LPA to disable the eSIM profile. The LPA disables the eSIM profile and then sends the result to the management module MM. The management module MM sends the result as well as other status information of the SIM card and the profile to the management server MS. In case of a successful disablement the process is finished. In case of an unsuccessful disablement or error a deletion process is triggered, because an eSIM profile that cannot be disabled represents a security risk (see Task 4).

### Task 4: Delete eSIM profile

In a first example, if the user wants to delete an eSIM profile (in the car, via app, etc.; arrows 7 and 8), then the management module MM sends a delete command to the LPA to delete this very eSIM profile.

In a second example, one of multiple users logs in to the vehicle and wants to load an eSIM profile. If there is not enough memory on the SIM card, an eSIM profile must be deleted first. After deleting the eSIM profile, a new eSIM profile can be install on the SIM card.

In a third example, the management module MM can delete eSIM profiles which are installed but not assigned to any specific users.

While the foregoing is directed to embodiments of the disclosure, other and further embodiments of the disclosure may be devised without departing from the basic scope thereof, and the scope thereof is determined by the claims that follow.

## Claims

1. A method (100) of providing a communication function in a user equipment, comprising:
receiving (110), at the user equipment, a login request to log the user in to the user equipment;
determining (120), by the user equipment, based on the login, whether the user equipment has a communication profile associated with the user;
if it is determined that the user equipment has a communication profile associated with the user, (130) enabling the stored communication profile;
if it is determined that the user equipment does not have a communication profile associated with the user stored:
sending (140), by the user equipment, a first request to a first server to request support information for obtaining a communication profile associated with the user, wherein the first server is an Original Equipment Manufacturer, OEM, server for managing user equipment and has stored a user profile of the user;
receiving (150), at the user equipment, the support information from the first server; and
obtaining (160), by the user equipment, the communication profile from the first server or a second server based on the support information, wherein the second server is a mobile network operator, MNO, server.

2. The method (100) of claim 1, further including:
enabling, by the user equipment, the communication profile obtained from the first server or second server.

3. The method (100) of claim 1 or 2, wherein the first request includes at least one of user equipment identification information, Subscriber Identity Module information, and user information.

4. The method (100) of any one of claims 1 to 3, wherein the support information includes an activation code for the communication profile.

5. The method (100) of claim 4, wherein the support information further includes at least one of Subscriber Identity Module information, a communication profile type, user information, and a confirmation code.

6. The method (100) of any one of claims 1 to 5, wherein obtaining (160), by the user equipment, the communication profile from the first server or a second server based on the support information includes:
sending, by the user equipment, a second request to the first server to request a download of the communication profile from the first server, in particular wherein the first server obtains the communication profile from the second server; or
sending, by the user equipment, a second request to the second server to request a download of the communication profile from the second server.

7. The method (100) of any one of claims 1 to 6, further including:
determining, by the user equipment, whether sufficient memory is available for installation of the communication profile.

8. The method (100) of claim 7, further including:
if it is determined that sufficient memory is available, installing the communication profile obtained from the first server or second server.

9. The method (100) of claim 7 or 8, further including:
if it is determined that sufficient memory is not available, deleting at least one other communication profile stored in the user equipment; and
installing the communication profile obtained from the first server or second server.

10. The method (100) of claim 9, wherein the at least one other communication profile is selected from the group consisting of an unknown communication profile, a least used communication profile, a recently least used communication profile, an oldest communication profile, and combinations thereof.

11. The method (100) of any one of claims 1 to 10, further including:
receiving, at the user equipment, a logout request to log the user out, in particular wherein the logout request is received via user input or automatically triggered by one or more events; and
disabling the communication profile.

12. The method (100) of any one of claims 1 to 11, further including:
receiving, at the user equipment, a communication profile deletion request, in particular wherein the deletion request is received via user input or automatically triggered by one or more events; and
deleting the communication profile according to the communication profile deletion request.

13. A management module (300) for a communication module (200), in a user equipment (10), the management module (300) comprising:
a communication interface configured for communication with the communication module (200) and a server (400, 500), wherein the communication interface is configured to receive a login request or information about a user login; and
a processor module configured to:
determine, based on the login, whether the communication module (200) has a communication profile associated with the user;
if it is determined that the communication module (200) has a communication profile associated with the user, initiate enabling of the stored communication profile;
if it is determined that the communication module (200) does not have a communication profile associated with the user stored, send a request to a first server (400) via the communication interface to request support information for obtaining a communication profile associated with the user, wherein the first server is an Original Equipment Manufacturer, OEM, server for managing user equipment and has stored a user profile of the user,
wherein the communication interface is further configured to receive the support information from the first server (400), and
wherein the management module (300) is further configured to obtain the communication profile from the first server (400) or a second server (500) based on the support information, wherein the second server is a mobile network operator, MNO, server.

14. A user equipment (10), comprising the management module (300) of claim 13 and a communication module (200).

## Patentansprüche

1. Verfahren (100) zum Bereitstellen einer Kommunikationsfunktion in einem Benutzergerät, umfassend:
Empfangen (110), beim Benutzergerät, einer Anmeldeanfrage zum Anmelden des Benutzers beim Benutzergerät;
Bestimmen (120), durch das Benutzergerät, basierend auf der Anmeldung, ob das Benutzergerät ein mit dem Benutzer verknüpftes Kommunikationsprofil aufweist;
falls bestimmt wird, dass das Benutzergerät ein mit dem Benutzer verknüpftes Kommunikationsprofil aufweist, (130) Aktivieren des gespeicherten Kommunikationsprofils;
falls bestimmt wird, dass das Benutzergerät kein mit dem Benutzer verknüpftes Kommunikationsprofil gespeichert hat:
Senden (140), durch das Benutzergerät, einer ersten Anfrage an einen ersten Server, um Unterstützungsinformationen zum Erlangen eines mit dem Benutzer verknüpften Kommunikationsprofils anzufordern, wobei der erste Server ein Original Equipment Manufacturer, OEM, Server zum Verwalten von Benutzergeräten ist und ein Benutzerprofil des Benutzers gespeichert hat;
Empfangen (150), beim Benutzergerät, der Unterstützungsinformationen vom ersten Server; und
Erlangen (160), durch das Benutzergerät, des Kommunikationsprofils vom ersten Server oder einem zweiten Server basierend auf den Unterstützungsinformationen, wobei der zweite Server ein Mobile Network Operator, MNO, Server ist.

2. Verfahren (100) nach Anspruch 1, ferner umfassend:
Aktivieren, durch das Benutzergerät, des vom ersten Server oder zweiten Server erlangten Kommunikationsprofils.

3. Verfahren (100) nach Anspruch 1 oder 2, wobei die erste Anfrage mindestens eines von Benutzergeräte-Identifikationsinformationen, Subscriber Identity Module-Informationen und Benutzerinformationen umfasst.

4. Verfahren (100) nach einem der Ansprüche 1 bis 3, wobei die Unterstützungsinformationen einen Aktivierungscode für das Kommunikationsprofil umfassen.

5. Verfahren (100) nach Anspruch 4, wobei die Unterstützungsinformationen ferner mindestens eines von Subscriber Identity Module-Informationen, einem Kommunikationsprofiltyp, Benutzerinformationen und einem Bestätigungscode umfassen.

6. Verfahren (100) nach einem der Ansprüche 1 bis 5, wobei Erlangen (160), durch das Benutzergerät, des Kommunikationsprofils vom ersten Server oder einem zweiten Server basierend auf den Unterstützungsinformationen umfasst:
Senden, durch das Benutzergerät, einer zweiten Anfrage an den ersten Server, um einen Download des Kommunikationsprofils vom ersten Server anzufordern,
insbesondere wobei der erste Server das Kommunikationsprofil vom zweiten Server erlangt; oder
Senden, durch das Benutzergerät, einer zweiten Anfrage an den zweiten Server, um einen Download des Kommunikationsprofils vom zweiten Server anzufordern.

7. Verfahren (100) nach einem der Ansprüche 1 bis 6, ferner umfassend:
Bestimmen, durch das Benutzergerät, ob ausreichender Speicher für die Installation des Kommunikationsprofils verfügbar ist.

8. Verfahren (100) nach Anspruch 7, ferner umfassend:
falls bestimmt wird, dass ausreichender Speicher verfügbar ist, Installieren des vom ersten Server oder zweiten Server erlangten Kommunikationsprofils.

9. Verfahren (100) nach Anspruch 7 oder 8, ferner umfassend:
falls bestimmt wird, dass nicht ausreichender Speicher verfügbar ist, Löschen mindestens eines anderen im Benutzergerät gespeicherten Kommunikationsprofils; und
Installieren des vom ersten Server oder zweiten Server erlangten Kommunikationsprofils.

10. Verfahren (100) nach Anspruch 9, wobei das mindestens eine andere Kommunikationsprofil ausgewählt ist aus der Gruppe bestehend aus einem unbekannten Kommunikationsprofil, einem am wenigsten benutzten Kommunikationsprofil, einem kürzlich am wenigsten benutzten Kommunikationsprofil, einem ältesten Kommunikationsprofil und Kombinationen davon.

11. Verfahren (100) nach einem der Ansprüche 1 bis 10, ferner umfassend:
Empfangen, beim Benutzergerät, einer Abmeldeanfrage zum Abmelden des Benutzers, insbesondere wobei die Abmeldeanfrage über eine Benutzereingabe empfangen wird oder automatisch durch ein oder mehrere Ereignisse ausgelöst wird; und
Deaktivieren des Kommunikationsprofils.

12. Verfahren (100) nach einem der Ansprüche 1 bis 11, ferner umfassend:
Empfangen, beim Benutzergerät, einer Kommunikationsprofil-Löschanfrage,
insbesondere wobei die Löschanfrage über eine Benutzereingabe empfangen wird oder automatisch durch ein oder mehrere Ereignisse ausgelöst wird; und
Löschen des Kommunikationsprofils gemäß der Kommunikationsprofil-Löschanfrage.

13. Verwaltungsmodul (300) für ein Kommunikationsmodul (200) in einem Benutzergerät (10), wobei das Verwaltungsmodul (300) umfasst:
eine Kommunikationsschnittstelle, die zur Kommunikation mit dem Kommunikationsmodul (200) und einem Server (400, 500) konfiguriert ist, wobei die Kommunikationsschnittstelle konfiguriert ist, um eine Anmeldeanfrage oder Informationen über eine Benutzeranmeldung zu empfangen; und
ein Prozessormodul, das konfiguriert ist, um:
zu bestimmen, basierend auf der Anmeldung, ob das Kommunikationsmodul (200) ein mit dem Benutzer verknüpftes Kommunikationsprofil aufweist;
falls bestimmt wird, dass das Kommunikationsmodul (200) ein mit dem Benutzer verknüpftes Kommunikationsprofil aufweist, das Aktivieren des gespeicherten Kommunikationsprofils zu initiieren;
falls bestimmt wird, dass das Kommunikationsmodul (200) kein mit dem Benutzer verknüpftes Kommunikationsprofil gespeichert hat, eine Anfrage an einen ersten Server (400) über die Kommunikationsschnittstelle zu senden, um Unterstützungsinformationen zum Erlangen eines mit dem Benutzer verknüpften Kommunikationsprofils anzufordern, wobei der erste Server ein Original Equipment Manufacturer, OEM, Server zum Verwalten von Benutzergeräten ist und ein Benutzerprofil des Benutzers gespeichert hat,
wobei die Kommunikationsschnittstelle ferner konfiguriert ist, um die Unterstützungsinformationen vom ersten Server (400) zu empfangen, und
wobei das Verwaltungsmodul (300) ferner konfiguriert ist, um das Kommunikationsprofil vom ersten Server (400) oder einem zweiten Server (500) basierend auf den Unterstützungsinformationen zu erlangen, wobei der zweite Server ein Mobile Network Operator, MNO, Server ist.

14. Benutzergerät (10), umfassend das Verwaltungsmodul (300) nach Anspruch 13 und ein Kommunikationsmodul (200).

## Revendications

1. Procédé (100) de fourniture d'une fonction de communication dans un équipement utilisateur, comprenant :
la réception (110), au niveau de l'équipement utilisateur, d'une demande de connexion pour connecter l'utilisateur à l'équipement utilisateur ;
la détermination (120), par l'équipement utilisateur, sur la base de la connexion, si l'équipement utilisateur possède un profil de communication associé à l'utilisateur ;
s'il est déterminé que l'équipement utilisateur possède un profil de communication associé à l'utilisateur, (130) l'activation du profil de communication mémorisé ;
s'il est déterminé que l'équipement utilisateur ne possède pas de profil de communication associé à l'utilisateur mémorisé :
l'envoi (140), par l'équipement utilisateur, d'une première demande à un premier serveur pour demander des informations de support pour obtenir un profil de communication associé à l'utilisateur, le premier serveur étant un serveur de fabricant d'équipement d'origine, OEM, pour gérer des équipements utilisateur et ayant mémorisé un profil d'utilisateur de l'utilisateur ;
la réception (150), au niveau de l'équipement utilisateur, des informations de support provenant du premier serveur ; et
l'obtention (160), par l'équipement utilisateur, du profil de communication provenant du premier serveur ou d'un second serveur sur la base des informations de support, le second serveur étant un serveur d'opérateur de réseau mobile, MNO.

2. Procédé (100) selon la revendication 1, comprenant en outre :
l'activation, par l'équipement utilisateur, du profil de communication obtenu du premier serveur ou du second serveur.

3. Procédé (100) selon la revendication 1 ou 2, dans lequel la première demande comprend au moins l'une d'informations d'identification d'équipement utilisateur, d'informations de module d'identité d'abonné et d'informations d'utilisateur.

4. Procédé (100) selon l'une quelconque des revendications 1 à 3, dans lequel les informations de support comprennent un code d'activation pour le profil de communication.

5. Procédé (100) selon la revendication 4, dans lequel les informations de support comprennent en outre au moins l'une d'informations de module d'identité d'abonné, d'un type de profil de communication, d'informations d'utilisateur et d'un code de confirmation.

6. Procédé (100) selon l'une quelconque des revendications 1 à 5, dans lequel l'obtention (160), par l'équipement utilisateur, du profil de communication provenant du premier serveur ou d'un second serveur sur la base des informations de support comprend :
l'envoi, par l'équipement utilisateur, d'une seconde demande au premier serveur pour demander un téléchargement du profil de communication provenant du premier serveur, en particulier dans lequel le premier serveur obtient le profil de communication provenant du second serveur ; ou
l'envoi, par l'équipement utilisateur, d'une seconde demande au second serveur pour demander un téléchargement du profil de communication provenant du second serveur.

7. Procédé (100) selon l'une quelconque des revendications 1 à 6, comprenant en outre: la détermination, par l'équipement utilisateur, si une mémoire suffisante est disponible pour l'installation du profil de communication.

8. Procédé (100) selon la revendication 7, comprenant en outre :
s'il est déterminé qu'une mémoire suffisante est disponible, l'installation du profil de communication obtenu du premier serveur ou du second serveur.

9. Procédé (100) selon la revendication 7 ou 8, comprenant en outre :
s'il est déterminé qu'une mémoire suffisante n'est pas disponible, la suppression d'au moins un autre profil de communication mémorisé dans l'équipement utilisateur ; et
l'installation du profil de communication obtenu du premier serveur ou du second serveur.

10. Procédé (100) selon la revendication 9, dans lequel l'au moins un autre profil de communication est sélectionné dans le groupe constitué d'un profil de communication inconnu, d'un profil de communication le moins utilisé, d'un profil de communication récemment le moins utilisé, d'un profil de communication le plus ancien et de combinaisons de ceux-ci.

11. Procédé (100) selon l'une quelconque des revendications 1 à 10, comprenant en outre :
la réception, au niveau de l'équipement utilisateur, d'une demande de déconnexion pour déconnecter l'utilisateur, en particulier dans lequel la demande de déconnexion est reçue par l'intermédiaire d'une entrée utilisateur ou est automatiquement déclenchée par un ou plusieurs événements ; et
la désactivation du profil de communication.

12. Procédé (100) selon l'une quelconque des revendications 1 à 11, comprenant en outre :
la réception, au niveau de l'équipement utilisateur, d'une demande de suppression de profil de communication, en particulier dans lequel la demande de suppression est reçue par l'intermédiaire d'une entrée utilisateur ou est automatiquement déclenchée par un ou plusieurs événements ; et
la suppression du profil de communication conformément à la demande de suppression de profil de communication.

13. Module de gestion (300) pour un module de communication (200) dans un équipement utilisateur (10), le module de gestion (300) comprenant :
une interface de communication configurée pour communiquer avec le module de communication (200) et un serveur (400, 500), l'interface de communication étant configurée pour recevoir une demande de connexion ou des informations concernant une connexion d'utilisateur ; et
un module de processeur configuré pour :
déterminer, sur la base de la connexion, si le module de communication (200) possède un profil de communication associé à l'utilisateur ;
s'il est déterminé que le module de communication (200) possède un profil de communication associé à l'utilisateur, initier l'activation du profil de communication mémorisé ;
s'il est déterminé que le module de communication (200) ne possède pas de profil de communication associé à l'utilisateur mémorisé, envoyer une demande à un premier serveur (400) par l'intermédiaire de l'interface de communication pour demander des informations de support pour obtenir un profil de communication associé à l'utilisateur, le premier serveur étant un serveur de fabricant d'équipement d'origine, OEM, pour gérer des équipements utilisateur et ayant mémorisé un profil d'utilisateur de l'utilisateur,
dans lequel l'interface de communication est en outre configurée pour recevoir les informations de support provenant du premier serveur (400), et
dans lequel le module de gestion (300) est en outre configuré pour obtenir le profil de communication provenant du premier serveur (400) ou d'un second serveur (500) sur la base des informations de support, le second serveur étant un serveur d'opérateur de réseau mobile, MNO.

14. Équipement utilisateur (10), comprenant le module de gestion (300) selon la revendication 13 et un module de communication (200).
